# EUROPÄISCHE PATENTSCHRIFT

(11) **EP 2 502 713 B1**
(45) Veröffentlichungstag und Bekanntmachung des Hinweises auf die Patenterteilung: **20.11.2019**
(21) Anmeldenummer: 12159477.4
(22) Anmeldetag: 14.03.2012
(51) Int. Cl.: B25J 9/16

(54) **Roboter, Steuervorrichtung für einen Roboter und Verfahren zum Betreiben eines Roboters**
Robot, control device for a robot and method for operating a robot
Robot, dispositif de commande pour un robot et procédé de fonctionnement d'un robot

(30) Priorität: 23.03.2011 DE 102011005985
(43) Veröffentlichungstag der Anmeldung: 26.09.2012
(73) Patentinhaber: KUKA Deutschland GmbH, 86165 Augsburg (DE)
(72) Erfinder: Finkemeyer, Bernd, 24119 Kronshagen (DE)
(74) Vertreter: Ege Lee & Partner Patentanwälte PartGmbB

(56) Entgegenhaltungen:
- EP-B1- 1 756 682
- US-A1- 2006 276 934
- US-B1- 6 329 779
- COX I J ET AL: "Exception handling in robotics", COMPUTER, IEEE, US, Bd. 22, Nr. 3, 1. März 1989 (1989-03-01), Seiten 43-49, XP011477979, ISSN: 0018-9162, DOI: 10.1109/2.16224
- TZES ANTHONY P.: "INTELLIGENT SELF-TUNING CONTROLLERS FOR ROBOT MANIPULATORS", INTERNATIONAL CONFERENCE ON SYSTEMS ENGINEERING. PITTSBURGH, AUG. 9 - 11, 1990; [INTERNATIONAL CONFERENCE ON SYSTEMS ENGINEERING], NEW YORK, IEEE, US, Bd. -, 9. August 1990 (1990-08-09), Seiten 5-08, XP000167831,
- , Retrieved from the Internet: URL:https://notes.shichao.io/lkd/ch7/ [retrieved on 2018-11-19]

## Beschreibung

Die Erfindung betrifft einen Roboter, eine Steuervorrichtung für einen Roboter und ein Verfahren zum Betreiben eines Roboters.

Roboter im Allgemeinen sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Roboter weisen üblicherweise einen Roboterarm mit mehreren Gliedern und programmierbare Steuerungen (Steuervorrichtungen) auf, die während des Betriebs die Bewegungsabläufe des Roboterarms steuern bzw. regeln. Die Antriebe sind z.B. elektrische Antriebe.

Steuerungsvorrichtungen für Roboter sind z.B. in der WO 2005/061187 A1 offenbart.

Die EP 1 756 682 B1 beschreibt eine Fehlerbehandlungsroutine, die eingesetzt wird, um aus einem folgenden Programmbefehls in einen bereits ausgeführten Programmbefehl zurückspringen zu können, obwohl das Roboterprogramm bereits mit der Ausführung des folgenden Programmbefehls beschäftigt ist. Nach einer Behandlung des Fehlers in der Fehlerbehandlungsroutine kann das zuvor unterbrochene d.h. das folgende Kommando weitergeführt oder übersprungen werden.

Die Aufgabe der Erfindung ist es, ein verbessertes Verfahren zum Betreiben eines Roboters bzw. eine dementsprechend eingerichtete Steuervorrichtung und einen dementsprechend eingerichteten Roboter anzugeben.

Die Aufgabe der Erfindung wird gelöst durch ein Verfahren zum Betreiben eines Roboters, der einen mehrere, nacheinander folgende Glieder, eine Befestigungsvorrichtung zum Befestigen eines Endeffektors und Antriebe zum Bewegen der Glieder aufweisenden Roboterarm und eine mit den Antrieben verbundene Steuervorrichtung aufweist, aufweisend folgende Verfahrensschritte:
- mittels eines auf der Steuervorrichtung laufenden Rechnerprogramms, Initiieren eines Kommandos, aufgrund dessen der Roboterarm, gesteuert durch die Steuervorrichtung beginnt, einen Applikationsschritt auszuführen,
- Erkennen wenigstens einer Abbruchbedingung des Kommandos aus einer Mehrzahl von Abbruchbedingungen, wobei wenigstens eine der Abbruchbedingungen azyklisch ausgewertet wird und die azyklisch ausgewertete Abbruchbedingung einer Interrupt-Service-Routine zugeordnet ist, die von Ereignissen und/oder Sensoren ausgelöst wird,
- Abbrechen des Ausführens des Applikationsschrittes aufgrund der erkannten Abbruchbedingung durch Abbrechen des initiierten Kommandos, ohne die Applikation zu unterbrechen indem Steuerungs- und Regelungsfunktionalitäten des Rechenprogramms, die in vereinheitlichten Modulen gekapselt sind, modulspezifische Abbruchbedingungen aufweisen, mit denen das Modul unabhängig von Benutzerabbruchbedingungen das Ende des Kommandos auslöst,
- gleichzeitig mit dem Erkennen der Abbruchbedingung, Übergabe einer Information über die Abbruchbedingung an das Rechnerprogramm, aufgrund derer das Ausführen des Applikationsschrittes abgebrochen wurde, und
- unmittelbar aufgrund der Information über die erkannte Abbruchbedingung, Initiieren eines der erkannten Abbruchbedingung zugeordneten weiteren Kommandos zum Ansteuern des Roboterarms mittels der Steuervorrichtung.

Ein weiterer Aspekt der Erfindung betrifft eine Steuervorrichtung, die eingerichtet ist, einen Roboterarm, der mehrere nacheinander folgende Glieder, eine Befestigungsvorrichtung zum Befestigen eines Endeffektors und Antriebe zum Bewegen der Glieder aufweist, und eingerichtet ist, den Roboterarm gemäß dem erfindungsgemäßen Verfahren zu betreiben.

Ein weiterer Aspekt der Erfindung betrifft einen Roboter, aufweisend einen Roboterarm, der mehrere nacheinander folgende Glieder, eine Befestigungsvorrichtung zum Befestigen eines Endeffektors und Antriebe zum Bewegen der Glieder aufweist, und eine mit den Antrieben verbundene erfindungsgemäße Steuervorrichtung.

Erfindungsgemäß wird demnach das Ausführen eines Applikationsschrittes, der durch das Kommando der Steuervorrichtung initiiert wurde, beim Vorliegen wenigstens einer der Abbruchbedingungen abgebrochen. Mit dem Erkennen der fraglichen Abbruchbedingung wird ebenfalls die Information über die Abbruchbedingung an das Anwenderprogramm übergeben bzw. übermittelt, aufgrund deren das Ausführen des Applikationsschrittes abgebrochen wurde. Somit braucht nach Abbruch die Steuervorrichtung bzw. das auf dieser laufende Rechner- bzw. Anwenderprogramm nicht die Ursache des Abbruchs zu ermitteln, wodurch es der Steuervorrichtung möglich ist, unmittelbar aufgrund der Information über die erkannte Abbruchbedingung, ein der erkannten Abbruchbedingung zugeordnetes weiteres Kommando zum Ansteuern des Roboterarms zu erzeugen. Dadurch ergeben sich Voraussetzungen für eine schnellere Reaktion der Steuervorrichtung auf einen Abbruch eines Applikationsschrittes.

Gemäß einer Ausführungsform des erfindungsgemäßen Verfahrens weist dieses ein Übergeben einer der erkannten Abbruchbedingung zugeordneten Kennung an das Rechner- bzw. Anwenderprogramm auf. Die übermittelte bzw. übergebene Kennung, die z.B. als ein Rückgabewert ausgeführt ist, ermöglicht der Steuervorrichtung bzw. dem darauf laufenden Rechner- bzw. Anwenderprogramm eine eindeutige Zuordnung der fraglichen Abbruchbedingung. Vorzugsweise ist jeder der Abbruchbedingungen der Mehrzahl von Abbruchbedingungen eine eindeutige Kennung zugeordnet, welche beim Erkennen der fraglichen Abbruchbedingung an die Steuervorrichtung bzw. an das Rechner- bzw. Anwenderprogramm übergeben wird.

Nach einer Variante des erfindungsgemäßen Verfahrens wird wenigstens eine der Abbruchbedingungen mit entsprechender Information von einem Softwaremodul erzeugt. Vorzugsweise kann jedem der Abbruchbedingungen ein eigenes Softwaremodul zugeordnet sein, welches beim Eintreten seiner Abbruchbedingung die Information z.B. in Form der eindeutigen Kennung an die Steuervorrichtung bzw. an das Rechner- bzw. Anwenderprogramm übergibt.

Die Abbruchbedingung kann beispielsweise das Erreichen einer auf den Endeffektor wirkende Maximalkraft, ein Erkennen eines Hindernisses und/oder ein Ablaufen einer vorgegebenen Zeitdauer sein.

Je nach Ausführungsform des erfindungsgemäßen Verfahrens kann dieses eine erweiterte explizite Definition des Kommandoausführungsende eines Applikationsschrittes darstellen.

So kann es vorgesehen sein, Steuerungs- und Regelungsfunktionalitäten in vereinheitlichten Modulen zu kapseln. Jedes Modul kann eine modulspezifische Abbruchbedingung aufweisen, die insbesondere vom Modulentwickler definiert wird. Dabei kann die Möglichkeit bestehen, die Parametrisierung der Abbruchbedingung automatisch aus dem jeweiligen Modulauftrag zu generieren. Die modulspezifische Abbruchbedingung überwacht vorzugsweise im Allgemeinen interne Modulzustände. Das Ergebnis dieser Modulabbruchbedingungen wird insbesondere mit Benutzerkommandoabbruchbedingungen ODER-verknüpft. Damit kann das Modul unabhängig von den Benutzerabbruchbedingungen das Ende eines Kommandos auslösen. Das Modul kann zudem eine Beschreibung der Ursache für das Wahr-Werden der Abbruchbedingung liefern, die dem Kommandorückgabewert beigefügt wird. Die Stopp- bzw. Abbruchursache kann nun leichter ermittelt werden. Der Benutzer ist bei dieser Lösung nicht mehr in der Verantwortung modulspezifische Eigenschaften in den Benutzerabbruchbedingungen berücksichtigen zu müssen.

Es können bei der Systemkonfiguration Default-Abbruchbedingungen definiert werden, die mit den Benutzerabbruchbedingungen der Applikation ODER-verknüpft werden. Sie gelten dann insbesondere systemweit. Damit ist es nicht mehr notwendig, obligatorische Abbrüche explizit angeben zu müssen. Die Default Abbruchbedingung kann insbesondere derart ausgeführt sein, dass sie nicht zur Systemlaufzeit, d.h. von der Applikation geändert wird. Damit wird sichergestellt, dass die effektiv zur Auswertung kommende Abbruchbedingung nicht von der Kommandogeschichte abhängt.

Da in einer globalen systemweit geltenden Default Abbruchbedingung die verwendeten Module nicht bekannt sind, ist die Definition einer allgemeingültigen für jedes verwendete Kommando sinnvollen Abbruchbedingung schwierig. Aus diesem Grund kann es vorgesehen sein, optionale Teile einer Abbruchbedingung zu definieren. Diese optionalen Teile weisen z.B. Schlüsselworte auf, die mit bestimmten Abbruchklassen assoziiert werden. Diese Schlüsselworte werden vorzugsweise später immer den beteiligten Modulen mitgeteilt.

Ein Schlüsselwort könnte z.B. SETPOINT_REACHED heißen. Damit würde ausgedrückt, dass sobald die Kommandosollwerte erreicht werden, das Kommando beendet werden soll. Ein Regelungsmodul, wie z.B. eine Kraft- oder Abstandsregelung, könnte dieses Schlüsselwort verstehen und würde entsprechend das Ausführungsende des Applikationsschrittes einleiten. Ein Modul zum Handverfahren des Roboters würde dieses Schlüsselwort nicht verstehen. Der Teil der Abbruchbedingung würde somit ignoriert.

Die globale Default-Abbruchbedingung kann durch die lokal definierte Kommandoabbruchbedingung von der Applikation außer Kraft gesetzt werden. Dieses geschieht beispielsweise durch Verwendung eines entsprechenden Schlüsselwortes. Durch Aufführen der obigen Schlüsselworte (z.B. SETPOINT_REACHED) in der lokalen Abbruchbedingung wird die Auswertung der damit assoziierten Abbruchbedingung abgeschaltet. Damit besitzt der Benutzer die Freiheit, den Teil selber zu definieren. Es kann darauf geachtet werden, dass die beschriebenen Manipulationen der Default Abbruchbedingung bzw. deren Abschalten nur für ein Kommando Gültigkeit haben.

Die Abbruchbedingung kann in nummerierte Teilausdrücke gegliedert sein. Dann kann jedes Kommando als Rückgabewert das Signal und die Nummer des Ausdrucks, der zur Erfüllung der Abbruchbedingung geführt hat, liefern. Es kann durchaus sein, dass mehrere Ausdrücke gleichzeitig erfüllt sind. In diesem Fall werden vorzugsweise alle Signale und Ausdrucksnummern zurückgegeben. Diese können zu einem beliebigen späteren Zeitpunkt von der Applikation eingesehen werden.

Es können dediziert azyklische Abbruchbedingungen angegeben werden. Diese werden beispielsweise in eine Interrupt-Service-Routine ausgelagert. Der zugehörige Interrupt wird vorzugsweise von Ereignissen bzw. Sensoren ausgelöst, die in der Abbruchbedingung verwendet werden. Auf diese Weise wird dieser Abbruchsbedingungsteil nicht zyklisch sondern nur bei Signaländerungen oder speziellen Ereignissen ausgewertet. Das Ergebnis wird wiederum mit der Kommandoabbruchbedingung ODER-verknüpft. Ein Vorteil bei dieser Lösung kann sein, dass der Programmlauf des Roboterprogramms (Anwenderprogramms) nicht unterbrochen wird, d.h. der Applikationsentwickler muss nicht Teile seiner Applikation in eine Interrupt-Service-Routine auslagern oder sie explizit programmieren. Nicht die Applikation sondern das Kommando wird unterbrochen.

Ein Ausführungsbeispiel der Erfindung ist exemplarisch in den beigefügten schematischen Zeichnungen dargestellt. Es zeigen:
- Fig. 1: einen Roboter mit einem Roboterarm und einer Steuervorrichtung und
- Fig. 2: einen als Greifer ausgeführten Endeffektor, der ein Objekt greift und an einer Befestigungsvorrichtung des Roboterarms befestigt ist.

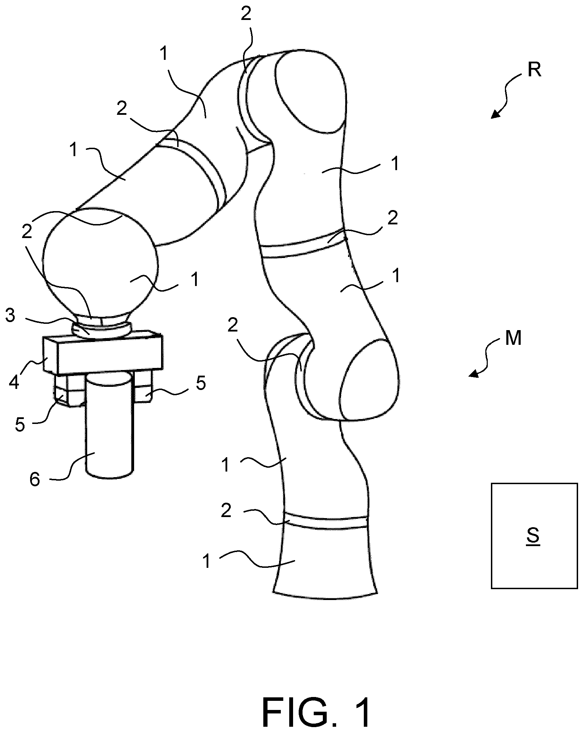

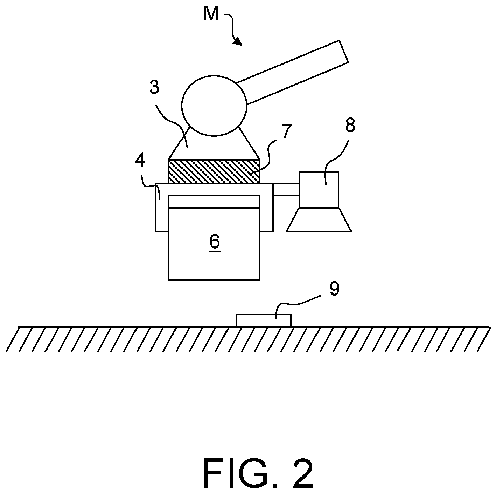

Die Fig. 1 zeigt einen Roboter R, der einen Roboterarm M und eine Steuervorrichtung S aufweist. Der Roboterarm M stellt im Wesentlichen den beweglichen Teil des Roboters R dar und umfasst mehrere, nacheinander folgende Glieder 1, die mittels Gelenke 2 miteinender verbunden sind. An einem seiner Enden weist der Roboterarm M eine Befestigungsvorrichtung 3 z.B. in Form eines Flansches auf, an dem z.B. ein Endeffektor in Form eines Greifers 4 befestigt werden kann. Der Greifer 4 weist z.B. Greifbacken 5 auf, mittels derer der Greifer 4 ein Objekt 6 halten kann, sodass dieses mittels des Roboters R bewegt werden kann. Der Greifer 4 mit gegriffenem Objekt 6, die Befestigungsvorrichtung 3 und Teile des Roboterarms M sind in der Fig. 2 näher dargestellt.

Der Roboterarm M weist ferner mit der Steuervorrichtung S verbundene, nicht näher dargestellte Antriebe auf, mittels derer die Glieder 1 bezüglich den Gelenken 2 zugeordneten Achsen relativ zueinander bewegt werden können.

Die Antriebe sind z.B. elektrische Antriebe und werden im Automatikbetrieb des Roboters R von der Steuervorrichtung S angesteuert, sodass die Befestigungsvorrichtung 3 oder ein sogenannter Tool Center Point des Roboters R automatisch eine vorbestimmte Bewegung durchführt. Zu diesem Zweck läuft auf der Steuervorrichtung S ein entsprechendes Anwenderprogramm. Die Steuervorrichtung S kann insbesondere derart ausgeführt sein, dass sie im Automatikbetrieb die Antriebe regelt. Auch der Greifer 4 ist mit der Steuervorrichtung S verbunden, sodass diese ein Greifen und Loslassen des Objekts 6 steuern kann.

Im Falle des vorliegenden Ausführungsbeispiels weist der Greifer 4 einen Kraft-/ Momentensensor 7 und eine Kamera 8 auf, die ebenfalls mit der Steuervorrichtung S verbunden sind, sodass dieser vom Kraft-/ Momentensensor 7 und von der Kamera 8 erzeugte Signale zur Verfügung stehen.

Im Falle des vorliegenden Ausführungsbeispiels ist das Anwenderprogramm derart ausgeführt, dass es ein Kommando abgibt, das zum Ausführen eines Applikationsschritts der aktuellen Anwendung des Roboters R vorgesehen ist. Des Weiteren ist die Steuervorrichtung S bzw. das auf dieser laufende Anwenderprogramm derart ausgeführt, sodass dieses Kommando aktiv ist, bis wenigstens eine von mehreren vorgegebenen Abbruchbedingungen erfüllt ist.

Im Falle des vorliegenden Ausführungsbeispiels handelt es sich beispielsweise bei den Abbruchbedingungen um die Folgenden:
Eine erste Abbruchbedingung ist das Erreichen einer auf das Objekt 6 bzw. auf den Greifer 4 wirkende Mindestkraft Fₘᵢₙ, beispielsweise 10N. Die auf das Objekt 6 bzw. auf den Greifer 4 wirkende Kraft wird insbesondere mit dem Kraft-/ Momentensensor 7 ermittelt und von der Steuervorrichtung S ausgewertet.

Eine zweite Abbruchbedingung ist das Erkennen eines Hindernisses 9, mit dem der Greifer 4 oder das Objekt 6 potenziell zusammenstoßen kann. Das Hindernis 9 kann mittels der Kamera 8 aufgenommener Bilddatensätze, die z.B. die Steuervorrichtung S auswertet, erkannt werden.

Eine dritte Abbruchbedingung ist das Ablaufen einer vorgegebenen Zeitdauer T, beispielsweise 55 Sekunden, ab Begin des Kommandos.

Im Falle des vorliegenden Ausführungsbeispiels ist jeder der Abbruchbedingungen eine Kennung z.B. in Form eines Rückgabewertes zugeordnet.

Im Falle des vorliegenden Ausführungsbeispiels ist die Steuervorrichtung S derart eingerichtet bzw. das auf der Steuervorrichtung S laufende Anwenderprogramm derart ausgeführt, dass beim Vorliegen wenigstens einer der Abbruchbedingungen die Steuervorrichtung S nicht nur das Kommando abbricht, sondern es wird auch eine Information bzw. ein Hinweis über die vorliegende Abbruchbedingung an die Steuervorrichtung S übergeben z.B. in Form der zugehörigen Kennung beispielsweise in Form des entsprechenden Rückgabewertes. Aufgrund dieser Information kann die auf der Steuervorrichtung S laufende Applikation bzw. das auf der Steuervorrichtung S laufende Anwenderprogramm direkt entscheiden, welche Aktion aufgrund der speziellen Abbruchbedingung auszuführen ist, ohne die Abbruchsursache nochmals zu ermitteln.

Dies kann z.B. mittels folgendem Pseudocodes programmiert sein:
Rückgabewert = Roboterkommando (..., 1:=Kraft>10N, 2:= Objekt_erkannt=wahr, 3:=Laufzeit>55sec.)
rufe Funktion(Rückgabewert) auf

War beispielsweise die Abbruchursache das Erkennen des Hindernisses 9, also die zweite Abbruchbedingung, dann wird die Funktion(2) aufgerufen. Nun werden die Abbruchursachen zurückgegeben, weshalb beispielsweise die Abbruchursache vom Anwender nicht mehr ermittelt werden muss.

Im Falle des vorliegenden Ausführungsbeispiels ist die Steuervorrichtung S bzw. das auf der Steuervorrichtung S laufende Anwenderprogramm derart ausgeführt, dass zusätzlich die insbesondere benutzerdefinierten Abbruchbedingungen durch Default Abbruchbedingungen ergänzt sind. Diese Default Abbruchbedingungen werden beispielsweise durch beteiligte Steuerungsmodule, d.h. aufgrund der mittels des Kraft-/ Momentensensors 7 ermittelten Kraft und des gegebenenfalls mittels der Kamera 8 erkannten Hindernisses 9, definiert.

Im Falle des vorliegenden Ausführungsbeispiels kann das Anwenderprogramm derart ausgeführt sein, dass Steuerungs- und Regelungsfunktionalitäten insbesondere in vereinheitlichten Modulen, also in Softwaremodulen, aufgeteilt oder gekapselt sind. Jedes Modul kann eine modulspezifische Abbruchbedingung aufweisen, die insbesondere vom Modulentwickler definiert wird. Dabei besteht die Möglichkeit, die Parametrisierung der Abbruchbedingung automatisch aus dem jeweiligen Modulauftrag zu generieren. Die modulspezifische Abbruchbedingung überwacht z.B. im Allgemeinen interne Modulzustände. Das Ergebnis dieser Modulabbruchbedingungen kann mit Benutzerkommandoabbruchbedingungen ODER-verknüpft sein. Damit kann das Modul unabhängig von den Benutzerabbruchbedingungen das Ende eines Kommandos auslösen. Das Modul kann zudem eine Beschreibung der Ursache für das Auftreten der Abbruchbedingung aufweisen, die dem Kommandorückgabewert beigefügt wird. Die Stoppursache des Kommandos kann dadurch leichter ermittelt werden. Der Benutzer ist bei dieser Lösung nicht mehr in der Verantwortung modulspezifische Eigenschaften in der Benutzerabbruchbedingung berücksichtigen zu müssen.

Im Falle des vorliegenden Ausführungsbeispiels kann beispielsweise ein dem Kraft-/ Momentensensors 7 zugeordnetes "Kraft-Modul", ein der Kamera 8 zugeordnetes "Objekterkennungs-Modul" oder ein der Zeitdauer T zugeordnetes "Zeit-Modul" eigene Abbruchkriterien liefern. In dem System weisen diese Module, die insbesondere als Softwaremodul ausgeführt sind, jeweils eine eigene eindeutige Kennung auf. Diese wird dann als Abbruchursache zurückgegeben. Im Falle des vorliegenden Ausführungsbeispiels kann dies folgendermaßen realisiert sein:
Das "Kraft-Modul" weist beispielsweise die Kennung K20, das "Objekterkennungs-Modul" weist die Kennung K23 und das "Zeit-Modul" weist die Kennung K18 auf. Aufgrund der übergebenen Kennung kann die auf der Steuervorrichtung S laufende Applikation bzw. das auf der Steuervorrichtung S laufende Anwenderprogramm direkt entscheiden, welche Aktion aufgrund der speziellen Abbruchbedingung auszuführen ist, ohne die Abbruchsursache nochmals zu ermitteln. Dies kann mittels folgendem Pseudocodes programmiert sein.

Rückgabewert = Roboterkommando (..., 1:=Kraft>10N, 2:= Objekt_erkannt=wahr, 3:=Laufzeit>55sec.) rufe Funktion(Rückgabewert) auf.

Falls nun das "Objekterkennungs-Modul" das Kommando abgebrochen hat, wird die Funktion(K23) aufgerufen.

Zusätzlich kann es vorgesehen sein, dass bei der Systemkonfiguration der Steuervorrichtung S Default-Abbruchbedingungen definiert sind, die mit den vom Anwender definierten Abbruchbedingungen der Applikation ODER-verknüpft sind. Sie gelten dann systemweit. Damit ist es nicht mehr notwendig, obligatorische Abbrüche explizit angeben zu müssen. Vorzugsweise kann und darf die Default Abbruchbedingung nicht zur Systemlaufzeit, d.h. von der Applikation geändert werden. Damit wird sichergestellt, dass die effektiv zur Auswertung kommende Abbruchbedingung nicht von der Kommandogeschichte abhängt.

Es können auch dediziert azyklische Abbruchbedingungen angegeben werden. Diese werden beispielsweise in eine Interruptserviceroutine der Steuervorrichtung S ausgelagert. Der zugehörige Interrupt wird beispielsweise von Ereignissen bzw. Sensoren ausgelöst, die in der Abbruchbedingung verwendet werden. Auf diese Weise wird dieser Abbruchsbedingungsteil nicht zyklisch sondern nur bei Signaländerungen oder speziellen Ereignissen ausgewertet. Das Ergebnis kann wiederum mit der Kommandoabbruchbedingung ODER-verknüpft sein. Vorteil bei dieser Lösung ist, dass der Programmlauf des Roboterprogramms bzw. des Anwenderprogramms nicht unterbrochen wird, d.h. der Applikationsentwickler muss nicht Teile seiner Applikation in eine Interrupt-Service-Routine auslagern oder sie explizit programmieren. Nicht die Applikation sonder das Kommando wird unterbrochen.

## Patentansprüche

1. Verfahren zum Betreiben eines Roboters (R), der einen mehrere, nacheinander folgende Glieder (1), eine Befestigungsvorrichtung (3) zum Befestigen eines Endeffektors (4) und Antriebe zum Bewegen der Glieder (1) aufweisenden Roboterarm (M) und eine mit den Antrieben verbundene Steuervorrichtung (S) aufweist, aufweisend folgende Verfahrensschritte:
- mittels eines auf der Steuervorrichtung (S) laufenden Rechnerprogramms, Initiieren eines Kommandos, aufgrund dessen der Roboterarm (M), gesteuert durch die Steuervorrichtung (S) beginnt, einen Applikationsschritt auszuführen,
- Erkennen wenigstens einer Abbruchbedingung des Kommandos aus einer Mehrzahl von Abbruchbedingungen, wobei wenigstens eine der Abbruchbedingungen azyklisch ausgewertet wird und die azyklisch ausgewertete Abbruchbedingung einer Interrupt-Service-Routine zugeordnet ist, die von Ereignissen und/oder Sensoren ausgelöst wird,
- Abbrechen des Ausführens des Applikationsschrittes aufgrund der erkannten Abbruchbedingung durch Abbrechen des initiierten Kommandos, ohne die Applikation zu unterbrechen, indem Steuerungs- und Regelungsfunktionalitäten des Rechenprogramms, die in vereinheitlichten Modulen gekapselt sind, modulspezifische Abbruchbedingungen aufweisen, mit denen das Modul unabhängig von Benutzerabbruchbedingungen das Ende des Kommandos auslöst,
- gleichzeitig mit dem Erkennen der Abbruchbedingung, Übergabe einer Information über die Abbruchbedingung an das Rechnerprogramm, aufgrund derer das Ausführen des Applikationsschrittes abgebrochen wurde, und
- unmittelbar aufgrund der Information über die erkannte Abbruchbedingung, Initiieren eines der erkannten Abbruchbedingung zugeordneten weiteren Kommandos zum Ansteuern des Roboterarms (M) mittels der Steuervorrichtung (S).

2. Verfahren nach Anspruch 1, aufweisend Übergeben einer der erkannten Abbruchbedingung zugeordneten Kennung an das Rechnerprogramm.

3. Verfahren nach Anspruch 1 oder 2, bei dem jeder der Abbruchbedingungen der Mehrzahl von Abbruchbedingungen eine eindeutige Kennung zugeordnet ist, welche beim Erkennen der fraglichen Abbruchbedingung an das Rechnerprogramm übergeben wird.

4. Verfahren nach einem der Ansprüche 1 bis 3, bei dem wenigstens eine der Abbruchbedingungen mit entsprechender Information von einem Softwaremodul erzeugt wird.

5. Verfahren nach einem der Ansprüche 1 bis 4, bei dem jeder Abbruchbedingung der Mehrzahl von Abbruchbedingungen ein Softwaremodul zugeordnet ist, welches beim Erkennen seiner Abbruchbedingung eine Information über die fragliche Abbruchbedingung an das Rechnerprogramm übergibt.

6. Verfahren nach einem der Ansprüche 1 bis 5, bei dem die Abbruchbedingung das Erreichen einer auf den Endeffektor (4) wirkende Maximalkraft, ein Erkennen eines Hindernisses (9) und/oder ein Ablaufen einer vorgegebenen Zeitdauer ist.

7. Steuervorrichtung, die eingerichtet ist, einen Roboterarm (M), der mehrere nacheinander folgende Glieder (1), eine Befestigungsvorrichtung (3) zum Befestigen eines Endeffektors (4) und Antriebe zum Bewegen der Glieder (1) aufweist, und eingerichtet ist, den Roboterarm (M) gemäß dem Verfahren nach einem der Ansprüche 1 bis 6 zu betreiben.

8. Roboter, aufweisend
- einen Roboterarm (M), der mehrere nacheinander folgende Glieder (1), eine Befestigungsvorrichtung (3) zum Befestigen eines Endeffektors (4) und Antriebe zum Bewegen der Glieder (1) aufweist, und
- eine mit den Antrieben verbundene Steuervorrichtung (S) zum Bewegen des Roboterarms (M) gemäß dem Anspruch 7.

## Claims

1. Method for operating a robot (R), which has a robot arm (M) having a plurality of links (1) following one after the other, an attaching device (3) for attaching an end effector (4) and drives for moving the links (1), and a control device (S) connected to the drives, comprising the following method steps:
- by means of a computer program running on the control device (S), initiating a command on the basis of which the robot arm (M), controlled by the control device (S), begins to carry out an application step,
- detecting at least one abort condition of the command from a plurality of abort conditions, wherein at least one of the abort conditions is evaluated acyclically and the acyclically evaluated abort condition is assigned to an interrupt service routine which is triggered by events and/or sensors,
- aborting the execution of the application step on the basis of the detected abort condition by aborting the initiated command, without interrupting the application in that control and control functionalities of the computer program which are encapsulated in standardised modules, comprise module-specific abort conditions, by means of which the module triggers the end of the command independently of user abort conditions,
- at the same time as recognising the abort condition, conveying information about the abort condition to the computer program on the basis of which the execution of the application step was aborted and
- directly due to the information about the recognised abort condition initiating one of the additional commands assigned to the recognised abort condition for controlling the robot arm (M) by means of the control device (S).

2. Method according to claim 1, comprising conveying an identifier assigned to the detected abort condition to the computer program.

3. Method according to claim 1 or 2, wherein each of the abort conditions of the plurality of abort conditions is assigned a unique identifier, which is conveyed to the computer program on detection of the abort condition in question.

4. Method according to any of claims 1 to 3, wherein at least one of the abort conditions is produced with corresponding information from a software module.

5. Method according to any of claims 1 to 4, wherein a software module is assigned to each abort condition of the plurality of abort conditions, which software module on recognising its abort condition conveys information about the abort condition in question to the computer program.

6. Method according to any of claims 1 to 5, wherein the abort condition is reaching a maximum force acting on the end effector (4), recognising an obstacle (9) and/or running down a predefined time period.

7. Control device which is configured to operate a robot arm (M) which comprises a plurality of links (1) following one after the other, an attaching device (3) for attaching an end effector (4) and drives for moving the links (1), and is configured to operate the robot arm (M) according to the method of any of claims 1 to 6.

8. Robot comprising
- a robot arm (M) which has a plurality of links (1) following one after the other, an attaching device (3) for attaching an end effector (4) and drives for moving the links (1), and
- a control device (S) connected to the drives for moving the robot arm (M) according to claim 7.

## Revendications

1. Procédé de fonctionnement d'un robot (R) qui comporte un bras de robot (M) présentant plusieurs membres (1) successifs, un dispositif de fixation (3) pour fixer un effecteur terminal (4) et des entraînements pour déplacer les membres (1), et un dispositif de commande (S) relié aux entraînements, comportant les étapes de procédé suivantes :
- initier au moyen d'un programme informatique fonctionnant sur le dispositif de commande (S) un ordre sur la base duquel le bras du robot (M), commandé par le dispositif de commande (S), commence à exécuter une étape d'application,
- détecter au moins une condition d'interruption de l'ordre à partir d'une pluralité de conditions d'interruption, au moins l'une des conditions d'interruption étant évaluée de manière acyclique et la condition d'interruption évaluée de manière acyclique étant associée à une routine de service d'interruption qui est déclenchée par des événements et/ou capteurs,
- interrompre l'exécution de l'étape d'application sur la base de la condition d'interruption détectée en interrompant l'ordre initié sans interrompre l'application, par le fait que les fonctions de commande et de régulation du programme informatique, qui sont encapsulées dans des modules unifiés, présentent des conditions d'interruption spécifiques au module avec lesquelles le module, indépendamment des conditions d'interruption par l'utilisateur, déclenche la fin de l'ordre déclencheurs,
- en même temps que détection de la condition d'interruption, transférer au programme informatique une information relative à la condition d'interruption sur la base de laquelle l'exécution de l'étape d'application a été interrompue, et
- directement sur la base de l'information relatives à la condition d'interruption détectée, initier un autre ordre associé à la condition d'interruption détectée pour piloter le bras du robot (M) au moyen du dispositif de commande (S).

2. Procédé selon la revendication 1, comprenant la transmission au programme informatique d'un identifiant associé à la condition d'interruption détectée.

3. Procédé selon la revendication 1 ou 2, dans lequel à chacune des conditions d'interruption de la pluralité de conditions d'interruption est associé un identifiant unique qui est transféré au programme informatique lorsque la condition d'interruption en question est détectée.

4. Procédé selon l'une des revendications 1 à 3, dans lequel au moins l'une des conditions d'interruption avec l'information correspondante est générée par un module de logiciel.

5. Procédé selon l'une des revendications 1 à 4, dans lequel à chaque condition d'interruption de la pluralité de conditions d'interruption est associé un module de logiciel qui, lorsque sa condition d'interruption est détectée, transfère au programme informatique une information concernant la condition d'interruption en question.

6. Procédé selon l'une des revendications 1 à 5, dans lequel la condition d'interruption est l'atteinte d'une force maximale agissant sur l'effecteur terminal (4), la détection d'un obstacle (9) et/ou l'expiration d'une durée de temps prédéterminée.

7. Dispositif de commande qui est conçu pour actionner un bras de robot (M) comprenant une pluralité de membres successifs (1), un dispositif de fixation (3) pour fixer un effecteur terminal (4) et des entraînements pour déplacer les membres (1), et conçu pour actionner le bras de robot (M) conformément au procédé selon l'une quelconque des revendications 1 à 6.

8. Robot comprenant
- un bras de robot (M) qui présente une pluralité de membres successifs (1), un dispositif de fixation (3) pour fixer un effecteur terminal (4) et des commandes pour déplacer les membres (1), et
- un dispositif de commande (S) relié aux entraînements pour déplacer le bras de robot (M) selon la revendication 7.
